# EUROPEAN PATENT APPLICATION

(11) **EP 4 755 197 A1**
(43) Date of publication of application: **10.06.2026**
(21) Application number: 25150997.2
(22) Date of filing: 09.01.2025
(51) Int. Cl.: A23G 9/12, A23G 9/22, B01F 101/13

(54) **STIRRING BLADE DETECTION MECHANISM FOR ICE CREAM MACHINE**

(30) Priority: 09.12.2024 CN 202423019243 U
(71) Applicant: Huizhou Liantek Technology Appliances Co., Ltd., Huizhou, Guangdong 516000 (CN)
(72) Inventor: ZHANG, Yuqi, Huizhou (CN); WANG, Hongtao, Huizhou (CN)
(74) Representative: Metida

(57) **Abstract**

Disclosed in the present utility model is a stirring blade detection mechanism for an ice cream machine, including: a machine body; a stirring cup, including a cup body and a cup cover, the cup cover being detachably mounted on the cup body, and a magnetic attraction assembly being arranged on the cup cover; a stirring blade, mounted on the cup cover, the stirring blade being in magnetic attraction with the magnetic attraction assembly; and a control assembly, including a detection switch and a trigger unit, the detection switch being used for detecting whether the stirring blade is mounted in place, and the trigger unit cooperating with the stirring blade to control an on/off state of the detection switch. The present utility model solves the problem that whether the stirring blade of the ice cream machine is correctly mounted at a predetermined position on the cup cover cannot be detected.

## Description

### FIELD OF TECHNOLOGY

The present utility model relates to the technical field of kitchen appliance devices, and in particular, to a stirring blade detection mechanism for an ice cream machine.

### BACKGROUND

An ice cream machine is a common appliance device in a kitchen, and is specially used for making delicious frozen desserts such as ice cream, smoothie, or milkshake. The user places food materials into an ice cream cup body, and starts an ice cream machine, so that the food materials are fully stirred in the cup body to make the ice cream, the smoothie, or the milkshake.

A stirring blade for the ice cream machine is a main component part of the ice cream machine, and the stirring blade is mounted on a cup cover. Currently, the stirring shaft of most ice cream machines is movably connected to the stirring blade, when ice cream needs to be stirred, the stirring shaft will be connected to the stirring blade and drive the stirring blade to perform stirring motion together in a cup with ice cream food materials, and after the ice cream is made, the stirring shaft will automatically ascend and return to be separated from the stirring blade. However, in the existing ice cream machine, there is no detection mechanism for detecting the mounting position of the stirring blade mounted on the cup cover, when the stirring shaft is dirty and the stirring blade cannot smoothly engage, the stirring blade will fall off during engaging, or when the stirring blade is not correctly mounted in the mounting hole on the cup cover, it is not easy for the user to find, at this time, the program will continue to control the stirring shaft to descend, when the stirring shaft touches the hard ice cream food materials or the stirring blade falling off in the cup, since the stirring shaft is still continuously running at a high speed, the stirring cup will be broken or the stirring blade and the stirring shaft will be stuck, and there is a security risk of damaging the ice cream drive mechanism or the stirring cup, thereby reducing the service life of the ice cream machine, and bringing a huge economic loss to the user.

### SUMMARY

The major purpose of the present utility model is to provide a stirring blade detection mechanism for an ice cream machine, aiming at solving the problem that whether a stirring blade of the ice cream machine is correctly mounted at a predetermined position on a cup cover cannot be detected.

To achieve the above purpose, the present utility model proposes a stirring blade detection mechanism for an ice cream machine, including:
a machine body;
a stirring cup, including a cup body and a cup cover, the cup cover being detachably mounted on the cup body, and a magnetic attraction assembly being arranged on the cup cover;
a stirring blade, mounted on the cup cover, the stirring blade being in magnetic attraction with the magnetic attraction assembly; and
a control assembly, including a detection switch and a trigger unit, the detection switch being used for detecting whether the stirring blade is mounted in place, and the trigger unit cooperating with the stirring blade to control an on/off state of the detection switch.

Optionally, the cup cover includes a first cup cover and a second cup cover, a mounting space for movement of the trigger unit is arranged between the first cup cover and the second cup cover, and the trigger unit is mounted in the mounting space.

Optionally, the cup cover is provided with a mounting hole for mounting the stirring blade, the magnetic attraction assembly is located in the mounting space, the magnetic attraction assembly includes a magnetic ring frame and a magnetic attraction member mounted in the magnetic ring frame, and the magnetic ring frame sleeves the mounting hole.

Optionally, the trigger unit includes a movable plate and a switch jacking rod, one end of the movable plate abuts against the magnetic ring frame, and the other end abuts against the switch jacking rod.

Optionally, the detection switch is electrically connected to the machine body, and the detection switch is provided with a detection member for detecting the stirring blade.

Optionally, the detection member is located above the mounting space, the detection member is of an inclined plate structure, and the switch jacking rod is used for jacking up the detection member.

Optionally, a mounting frame is arranged in the mounting space, a support rod is arranged on the movable plate, and two ends of the support rod are respectively placed on the mounting frame.

Optionally, a connecting rod is arranged on the magnetic ring frame, and a bent portion for hooking the connecting rod is arranged at one end of the movable plate close to the magnetic ring frame.

Optionally, the switch jacking rod is sleeved with a sealing ring.

Optionally, the machine body further includes a stirring shaft, and the stirring shaft ascends and descends relative to the machine body to be connected to or separated from the stirring blade.

The present utility model has the following beneficial effects: the problem that whether the stirring blade of the ice cream machine is correctly mounted at a predetermined position on the cup cover cannot be detected is solved; the magnetic attraction member is arranged on the cup cover to be in magnetic attraction with the stirring blade, the trigger unit is arranged on the cup cover, the detection switch is arranged on the machine body, when the stirring blade is correctly mounted on the cup cover, the stirring blade will be in magnetic attraction with the magnetic attraction member to drive the magnetic ring frame to move downwards, and the detection switch is in an off state by means of the trigger unit, so that a stirring program is started; and if the stirring blade is not correctly mounted, the detection switch will be kept in an on state to prevent the stirring program from being started, thereby achieving real-time monitoring of the mounting state of the stirring blade, improving the security and reliability of the ice cream machine, and improving the use experience of the user.

### BRIEF DESCRIPTION OF THE DRAWINGS

To describe the technical solutions in the embodiments of the present utility model or in the prior art more clearly, the following will briefly introduce the drawings required for describing the embodiments or the prior art. Apparently, the drawings in the following description show merely some embodiments of the present utility model, and other drawings may also be obtained according to structures shown in these drawings without paying any creative effort.
FIG. 1 is a schematic exploded view of a stirring blade detection mechanism for an ice cream machine in the present utility model;
FIG. 2 is a sectional view of a stirring blade detection mechanism for an ice cream machine in the present utility model;
FIG. 3 is a schematic structural view of a control assembly in the present utility model;
FIG. 4 is a schematic structural view of a trigger unit in the present utility model;

### Reference signs:

1, Machine body;
2, Stirring cup; 21, Cup cover; 211, First cup cover; 212, Second cup cover; 213, Mounting frame; 22, Cup body; 23, Mounting space;
3, Stirring blade;
4, Control assembly; 41, Trigger unit; 411, Movable plate; 4111, Bent portion; 412, Switch jacking rod; 413, Support rod; 414, Sealing ring; 42, Detection switch; 421, Detection member;
5, Magnetic attraction assembly; 51, Magnetic ring frame; 52, Magnetic attraction member; 53, Connecting rod;
6, Stirring shaft;

Implementation of the objectives, functional features, and advantages of the present utility model will be further described with reference to the drawings in combination with the embodiments.

### DESCRIPTION OF THE EMBODIMENTS

The following will clearly and completely describe the technical solutions in the embodiments of the present utility model in combination with the drawings in the embodiments of the present utility model. Apparently, the described embodiments are merely a part rather than all of the embodiments of the present utility model. All other embodiments obtained by those of ordinary skill in the art based on the embodiments of the present utility model without paying any creative effort shall fall within the scope of protection of the present utility model.

It needs to be noted that if the embodiments of the present utility model relate to a directivity indication (e.g., up, down, left, right, front, back, ...), the directivity indication is only used for explaining a relative position relationship, a motion condition, etc. between components in a certain specific posture (as shown in the drawings), and if the specific posture changes, the directivity indication changes accordingly.

In addition, if the embodiments of the present utility model relate to the descriptions such as "first" and "second", the descriptions such as "first" and "second" are only for the purpose of description, and cannot be understood as indicating or implying the relative importance thereof or implicitly indicating the number of indicated technical features. Thus, the features defined with "first" and "second" may explicitly or implicitly include at least one of the features. In addition, if the meaning of "and/or" appearing in the whole text is comprising three parallel solutions, e.g., "A and/or B", comprising solution A, or solution B, or both A and B. In addition, the technical solutions of the embodiments can be combined with each other, but they must be based on the implementation by those of ordinary skill in the art. When the combination of the technical solutions is contradictory or cannot be implemented, it shall be considered that the combination of the technical solutions does not exist, and does not fall within the scope of protection of the present utility model.

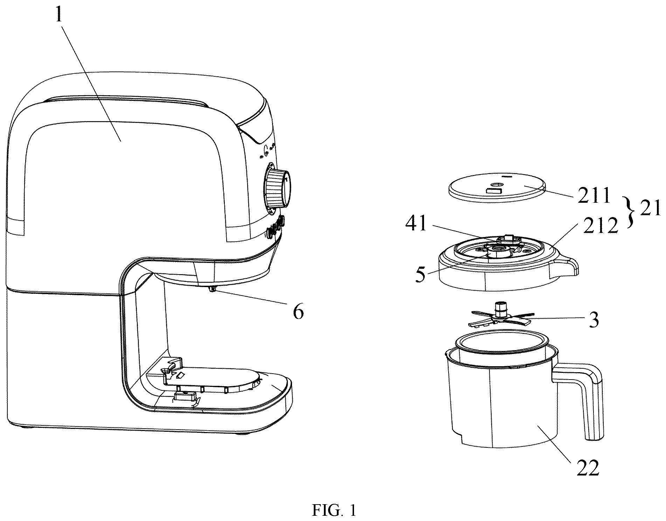

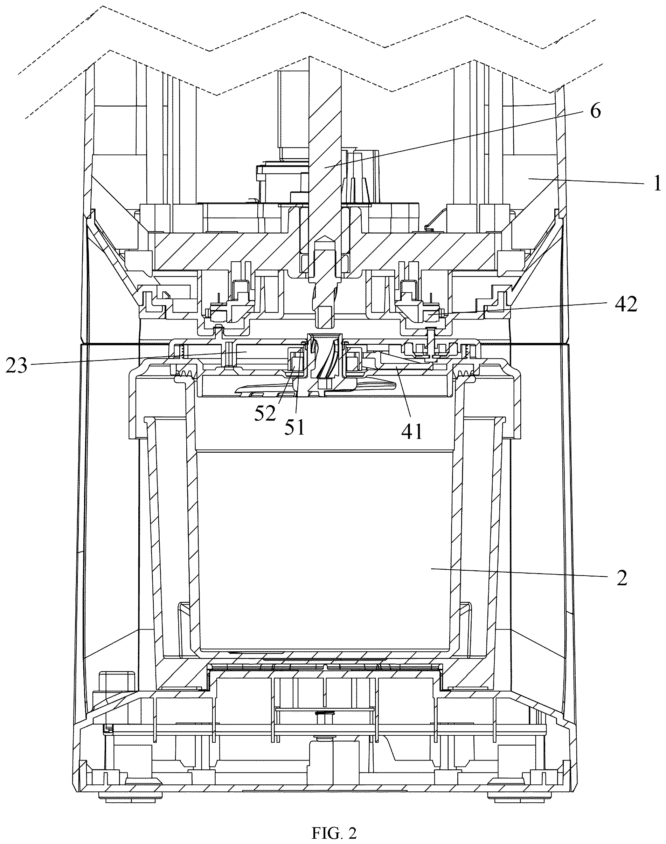

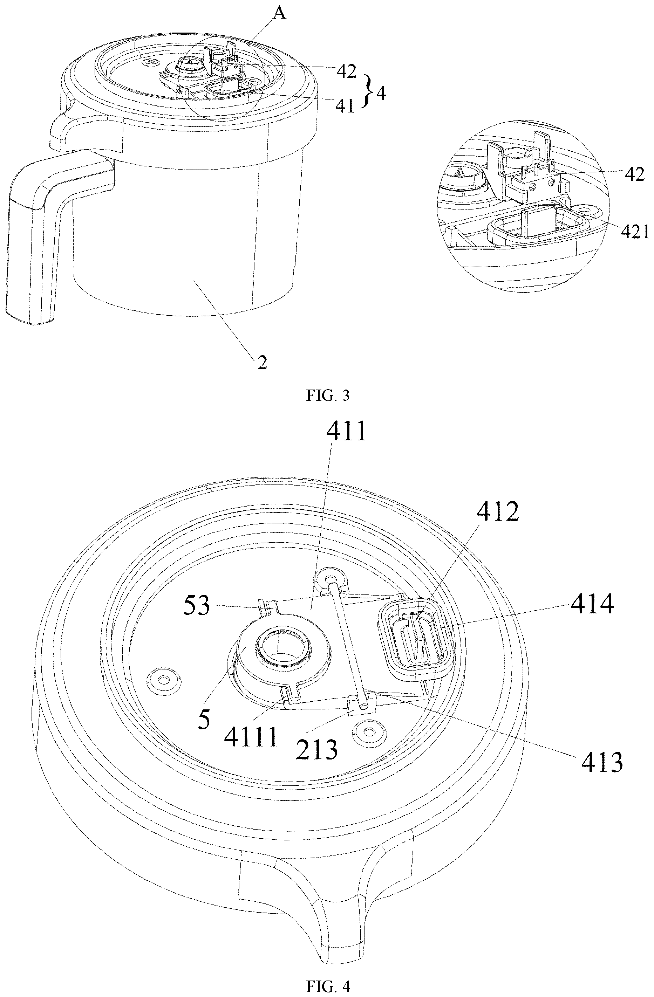

An embodiment of the present utility model proposes a stirring blade 3 detection mechanism for an ice cream machine, referring to FIG. 1-FIG. 4, including:
a machine body 1;
a stirring cup 2, including a cup body 22 and a cup cover 21, the cup cover 21 being detachably mounted on the cup body 22, and a magnetic attraction assembly 5 being arranged on the cup cover 21;
a stirring blade 3, mounted on the cup cover 21, the stirring blade 3 being in magnetic attraction with the magnetic attraction assembly 5; and
a control assembly 4, including a detection switch 42 and a trigger unit 41, the detection switch 42 being used for detecting whether the stirring blade 3 is mounted in place, and the trigger unit 41 cooperating with the stirring blade 3 to control an on/off state of the detection switch 42.

This embodiment solves the problem that whether the stirring blade 3 of the ice cream machine is correctly mounted at a predetermined position on the cup cover 21 cannot be detected; the magnetic attraction member 52 is arranged on the cup cover 21 to be in magnetic attraction with the stirring blade 3, the trigger unit 41 is arranged on the cup cover 21, the detection switch 42 is arranged on the machine body 1, when the stirring blade 3 is correctly mounted on the cup cover 21, the stirring blade 3 will be in magnetic attraction with the magnetic attraction member 52 to drive the magnetic ring frame 51 to move downwards, and the detection switch 42 is in an off state by means of the trigger unit 41, so that a stirring program is started; and if the stirring blade 3 is not correctly mounted, the detection switch 42 will be kept in an on state to prevent the stirring program from being started, thereby achieving real-time monitoring of the mounting state of the stirring blade 3, improving the security and reliability of the ice cream machine, and improving the use experience of the user. Specifically, the stirring cup 2 is internally provided with a stirring space capable of accommodating ice cream stirring food materials, when the stirring cup 2 is capable of stirring, the stirring food materials are placed in the stirring cup 2, the stirring cup 2 is fixed to the machine body 1, and at this time, the detection switch 42 is located above the cup cover 21; when the stirring blade 3 is mounted in place, the magnetic attraction assembly 5 will move downwards in the direction of the stirring blade 3 under the action of magnetic attraction and simultaneously drive the trigger unit 41 to jack up the detection switch 42, so that the detection switch 42 is in an off state, and at this time, the detection switch 42 will automatically send an off signal to the machine body 1, indicating that the stirring blade 3 is correctly mounted on the cup cover 21; when the stirring blade 3 is not mounted in place or the stirring blade 3 falls off when the stirring shaft 6 is connected to the stirring blade 3, the magnetic attraction assembly 5 cannot be attracted by the stirring blade 3, the magnetic attraction assembly 5 moves upwards to reset under the drive of the trigger unit 41, the detection switch 42 cannot be jacked up, the detection switch 42 is in an on state, and at this time, the detection switch 42 will automatically sends an on signal to the machine body 1, indicating that the stirring blade 3 is not correctly mounted, thereby improving the security and reliability of the ice cream machine, and avoiding the security problem due to improper mounting of the stirring blade 3.

Further, the cup cover 21 includes a first cup cover 211 and a second cup cover 212, a mounting space 23 for movement of the trigger unit 41 is arranged between the first cup cover 211 and the second cup cover 212, and the trigger unit 41 is mounted in the mounting space 23. In this embodiment, the cup cover 21 includes a first cup cover 211 and a second cup cover 212, and a mounting space 23 for mounting and movement of the trigger unit 41 is arranged between the first cup cover 211 and the second cup cover 212, wherein the mounting space 23 provides a sealed space for the trigger unit 41, thereby prolonging the service life of the trigger unit 41, improving the accuracy of the trigger unit 41, and avoiding the movement of the trigger unit 41 from being influenced by the outside; moreover, the first cup cover 211 is detachably connected to the second cup cover 212, and when parts of the trigger unit 41 need to be replaced or maintained, the first cup cover 211 can be opened for replacement or maintenance, thereby reducing the maintenance cost. It needs to be noted that in this embodiment, the first cup cover 211 and the second cup cover 212 may be connected by means of screws, fasteners or the like.

Further, the cup cover 21 is provided with a mounting hole for mounting the stirring blade 3, the magnetic attraction assembly 5 is located in the mounting space 23, the magnetic attraction assembly 5 includes a magnetic ring frame 51 and a magnetic attraction member 52 mounted in the magnetic ring frame 51, and the magnetic ring frame 51 sleeves the mounting hole. In this embodiment, the first cup cover 211 is provided with a first through hole, the second cup cover 212 is provided with a second through hole, the first cup cover 211 is mounted on the second cup cover 212, and the second through hole protrudes upwards to be aligned with the first through hole and to form a mounting hole for mounting the stirring blade 3, further, the magnetic ring frame 51 sleeves the mounting hole, and the magnetic attraction member 52 is mounted in the magnetic ring frame 51, that is, the magnetic ring frame 51 sleeves the periphery of the second through hole, and the magnetic ring frame 51 and the magnetic attraction member 52 are both of an annular structure; when the stirring blade 3 is correctly mounted in the mounting hole, a magnetic attraction force will be generated between the stirring blade 3 and the magnetic attraction member 52 to attract the stirring blade 3 in the mounting hole, thereby avoiding the stirring blade 3 from falling off or shifting, further, the magnetic attraction assembly 5 is arranged in the mounting space 23, so that the movement range of the magnetic ring frame 51 is limited, thereby avoiding the magnetic ring frame 51 from falling off due to excessive movement of the magnetic ring frame 51. It needs to be noted that in this embodiment, the stirring blade 3 is made of a material that can be attracted by the magnetic attraction member 52, such as stainless steel or iron.

Further, the trigger unit 41 includes a movable plate 411 and a switch jacking rod 412, one end of the movable plate 411 abuts against the magnetic ring frame 51, and the other end abuts against the switch jacking rod 412. In this embodiment, the movable plate 411 drives the switch jacking rod 412 to move upwards and the switch jacking rod 412 to reset to move downwards to drive the movable rod to reset, so that the detection switch 42 is in an off or on state; when the stirring blade 3 is correctly mounted in the mounting hole, the magnetic ring frame 51 and the magnetic attraction member 52 move downwards in the direction of the stirring blade 3 under the action of the magnetic attraction force, and the magnetic ring frame 51 will drive one end of the movable rod to move downwards to make the other end of the movable rod move upwards and jack up the switch jacking rod 412, so that the detection switch 42 is jacked up, and at this time, the detection switch 42 when in an off state sends an off signal to the machine body 1, and the machine body 1 starts the stirring program; when the stirring blade 3 is not correctly mounted in the mounting hole or the stirring blade 3 falls off when the stirring shaft 6 is connected to the stirring blade 3, the magnetic ring frame 51 and the magnetic attraction member 52 cannot be attracted by the stirring blade 3, the pressing state of the detection switch 42 is released and the detection switch resets, and the switch jacking rod 412 moves downwards and resets and simultaneously drives one end of the movable rod abutting against the switch jacking rod 412 to move downwards, so that one end of the movable rod abutting against the magnetic ring frame 51 moves upwards to drive the magnetic ring frame 51 and the magnetic attraction member 52 to move upwards to reset, at this time, the detection switch 42 is in an on state, the detection switch 42 sends an on signal to the machine body 1, and the machine body 1 cannot start the stirring program, thereby avoiding the security hazards such as the breakage of the stirring cup 2 and the damage of the drive mechanism of the machine body 1 due to the fact that the stirring blade 3 is mounted improperly and the stirring program is still running.

Further, a mounting frame 213 is arranged in the mounting space 23, a support rod 413 is arranged on the movable plate 411, and two ends of the support rod 413 are respectively placed on the mounting frame 213. In this embodiment, a mounting frame 213 is arranged in the mounting space 23, the mounting frame 213 is arranged on two sides of the movable plate 411, a support rod 413 is arranged on the movable plate 411, and two ends of the support rod 413 are respectively placed on the mounting frame 213, so that the movable plate 411 does reciprocating motion in the length direction of the support rod 413 to make the movable plate 411 not shake or shift, that is, when the magnetic ring frame 51 moves up and down, the movable rod is supported by the mounting frame 213 and the support rod 413, so that the movable rod moves up and down by taking the support rod 413 as a central axis, thereby avoiding front-back deviation of the movable plate 411 when the magnetic ring frame 51 drives the movable plate 411 to move up and down.

Further, a connecting rod 53 is arranged on the magnetic ring frame 51, and a bent portion 4111 for hooking the connecting rod 53 is arranged at one end of the movable plate 411 close to the magnetic ring frame 51. In this embodiment, a connecting rod 53 is arranged on the magnetic ring frame 51, a bent portion 4111 is arranged on the movable plate 411, and the bent portion 4111 hooks the connecting rod 53, so that the movable plate 411 does not shift or accidentally falls off when moving up and down along the magnetic ring frame 51.

Further, the switch jacking rod 412 is sleeved with a sealing ring 414. In this embodiment, the switch jacking rod 412 is sleeved with a sealing ring 414, and when the switch jacking rod 412 is jacked up by the movable rod, the seal ring 414 deforms; when the stirring blade 3 is not correctly mounted in the mounting hole of the cup cover 21, the magnetic ring frame 51 and the magnetic attraction member 52 cannot be attracted by the stirring blade 3, and no magnetic attraction force is generated, so that the movable rod loses the pushing force for jacking up the switch jacking rod 412, and at this time, the sealing ring 414 gradually restores to the original shape and transmits an elastic force through a contact surface with the movable rod, so that the movable rod moves downwards and restores to the original position.

Further, the detection switch 42 is electrically connected to the machine body 1, and the detection switch 42 is provided with a detection member 421 for detecting the stirring blade 3. In this embodiment, the detection switch 42 is electrically connected to the machine body 1, so that an electric signal of the detection switch 42 can be sent to the machine body 1 to control the machine body 1 to drive the stirring shaft 6 to ascend and descend and start and stop the stirring program; the detection switch 42 can automatically detect by means of the detection member 421 whether the stirring blade 3 is correctly mounted in the mounting hole of the cup cover 21, so that the detection switch 42 sends a signal to the machine body 1 when detecting whether the stirring blade 3 is correctly mounted in the mounting hole of the cup cover 21.

Further, the detection member 421 is located above the mounting space 23, the detection member 421 is of an inclined plate structure, and the switch jacking rod 412 is used for jacking up the detection member 421. In this embodiment, the detection switch 42 is arranged on the machine body 1, the detection member 421 is of an inclined plate structure, the switch jacking rod 412 is arranged on the cup cover 21, the inclined plate structure is located below the detection switch 42 and is inclined downwards to the cup cover 21, and the detection member 421 abuts against the switch jacking rod 412, so that the detection switch 42 can detect whether the stirring cup 2 is correctly mounted in the mounting hole of the cup cover 21; when the stirring blade 3 is correctly mounted in the mounting hole, the magnetic ring frame 51 and the magnetic attraction member 52 move downwards in the direction of the stirring blade 3 under the action of the magnetic attraction force, and the magnetic ring frame 51 will drive one end of the movable rod to move downwards to make the other end of the movable rod move upwards, and the switch jacking rod 412 moves upwards as the magnetic ring frame 51 and the magnetic attraction member 52 move downwards, so that the detection member 421 is jacked up, and at this time, the detection switch 42 when in an off state sends an off signal to the machine body 1, and the machine body 1 starts the stirring program; when the stirring blade 3 is not correctly mounted in the mounting hole or the stirring blade 3 falls off when the stirring shaft 6 is connected to the stirring blade 3, the magnetic ring frame 51 and the magnetic attraction member 52 cannot be attracted by the stirring blade 3, the pressing state of the detection member 421 is released and the detection switch resets, and the switch jacking rod 412 moves downwards and resets and simultaneously drives one end of the movable rod abutting against the switch jacking rod 412 to move downwards, so that one end of the movable rod abutting against the magnetic ring frame 51 moves upwards to drive the magnetic ring frame 51 and the magnetic attraction member 52 to move upwards to reset, at this time, the detection switch 42 is in an on state, the detection switch 42 sends an on signal to the machine body 1, and the machine body 1 cannot start the stirring program.

Further, the machine body 1 further includes a stirring shaft 6, and the stirring shaft 6 ascends and descends relative to the machine body 1 to be connected to or separated from the stirring blade 3. In this embodiment, the stirring shaft 6 is fixed to the machine body 1, the detection switch 42 is electrically connected to the machine body 1, and when the detection switch 42 sends an off signal to the machine body 1, the machine body 1 controls the stirring shaft 6 to move downwards to be connected to the stirring blade 3; when the detection switch 42 sends an on signal to the machine body 1, the machine body 1 controls the stirring shaft 6 to move upwards to reset.

The foregoing descriptions are merely optional embodiments of the present utility model, but are not intended to limit the patent scope of the present utility model, any equivalent structural transformation made using the contents of the specification and drawings of the present utility model, or directly/indirectly applied in other related technical fields, under the utility model concept of the present utility model, is included in the scope of patent protection of the present utility model.

## Claims

1. A stirring blade detection mechanism for an ice cream machine, **characterized by** comprising:
a machine body;
a stirring cup, comprising a cup body and a cup cover, the cup cover being detachably mounted on the cup body, and a magnetic attraction assembly being arranged on the cup cover;
a stirring blade, mounted on the cup cover, the stirring blade being in magnetic attraction with the magnetic attraction assembly; and
a control assembly, comprising a detection switch and a trigger unit, the detection switch being used for detecting whether the stirring blade is mounted in place, and the trigger unit cooperating with the stirring blade to control an on/off state of the detection switch.

2. The stirring blade detection mechanism for an ice cream machine according to claim 1, **characterized in that** the cup cover comprises a first cup cover and a second cup cover, a mounting space for movement of the trigger unit is arranged between the first cup cover and the second cup cover, and the trigger unit is mounted in the mounting space.

3. The stirring blade detection mechanism for an ice cream machine according to claim 2, **characterized in that** the cup cover is provided with a mounting hole for mounting the stirring blade, the magnetic attraction assembly is located in the mounting space, the magnetic attraction assembly comprises a magnetic ring frame and a magnetic attraction member mounted in the magnetic ring frame, and the magnetic ring frame sleeves the mounting hole.

4. The stirring blade detection mechanism for an ice cream machine according to claim 3, **characterized in that** the trigger unit comprises a movable plate and a switch jacking rod, one end of the movable plate abuts against the magnetic ring frame, and the other end abuts against the switch jacking rod.

5. The stirring blade detection mechanism for an ice cream machine according to claim 4, **characterized in that** the detection switch is electrically connected to the machine body, and the detection switch is provided with a detection member for detecting the stirring blade.

6. The stirring blade detection mechanism for an ice cream machine according to claim 5, **characterized in that** the detection member is located above the mounting space, the detection member is of an inclined plate structure, and the switch jacking rod is used for jacking up the detection member.

7. The stirring blade detection mechanism for an ice cream machine according to claim 4, **characterized in that** a mounting frame is arranged in the mounting space, a support rod is arranged on the movable plate, and two ends of the support rod are respectively placed on the mounting frame.

8. The stirring blade detection mechanism for an ice cream machine according to claim 4, **characterized in that** a connecting rod is arranged on the magnetic ring frame, and a bent portion for hooking the connecting rod is arranged at one end of the movable plate close to the magnetic ring frame.

9. The stirring blade detection mechanism for an ice cream machine according to claim 4, **characterized in that** the switch jacking rod is sleeved with a sealing ring.

10. The stirring blade detection mechanism for an ice cream machine according to any one of claims 1 to 9, **characterized in that** the machine body further comprises a stirring shaft, and the stirring shaft ascends and descends relative to the machine body to be connected to or separated from the stirring blade.
